# EUROPÄISCHE PATENTANMELDUNG

(11) **EP 4 437 819 A1**
(43) Veröffentlichungstag der Anmeldung: **02.10.2024**
(21) Anmeldenummer: 24166619.7
(22) Anmeldetag: 27.03.2024
(51) Int. Cl.: A01B 59/04, A01B 59/043, A01D 67/00

(54) **LANDWIRTSCHAFTLICHES GERÄT MIT FANGARM**

(30) Priorität: 31.03.2023 DE 102023108384
(71) Anmelder: Lemken GmbH & Co KG, 46519 Alpen (DE)
(72) Erfinder: Wübbels, Benedikt, 46325 Borken (DE); Pister, Michael, 48369 Saerbeck (DE)

(57) **Zusammenfassung**

Es wird ein landwirtschaftliches Gerät mit einem Fangarm zur Kopplung und Mitnahme eines Nachlaufgerätes vorgeschlagen. Der Fangarm trägt eine Koppelvorrichtung mit einer Klinke. Um den bei zunehmend größeren Arbeitsbreiten des Nachlaufgerätes auftretenden Zug- und Koppelkräften zu begegnen, ist die Klinke mit einer Verschlussfalle arretiert, um den durch die Zug- und Koppelkräfte entstehenden, vorzeitigen Verschleiß der Koppelvorrichtung zu vermeiden.

## Beschreibung

Die Erfindung betrifft ein landwirtschaftliches Gerät mit einem Fangarm gemäß dem Oberbegriff des Patentanspruches 1.

Aus der Offenlegung DE4001267A1 ist eine Kupplung zwischen einem Pflug und einem als Packer ausgebildeten Nachlaufgerät beschrieben. Der Packer weist beidseitig jeweils einen Packerzugarm und an dessen Ende einen Haken auf, welcher den Packer lösbar mit einem Tragarm des Pfluges verbindet. Hierzu weist der Tragarm V-förmige Fangnasen und einen dazwischen befindlichen Aufnahmeschlitz auf, in welchen eine schwenkbare Anschlagnase ragt, welche durch einen Hydraulikzylinder von einer Arretierstellung zur Mitnahme des Packers in eine Lösestellung zum Entkoppeln des Packers verschwenkt werden kann. Mit im Markt inzwischen erhältlichen Pflügen und Packern mit zunehmend größeren Arbeitsbreiten steigt der Zugkraftbedarf der Nachlaufgeräte enorm, so dass die Verbindungseinrichtungen immer größeren Belastungen ausgesetzt sind. Im vorliegenden Beispiel der Offenlegung DE4001267A1 muss der die Anschlagnase betätigende Hydraulikzylinder hinreichend groß ausgelegt werden, um die zwischen Anschlagnase und Haken wirkenden Reibkräfte zu überwinden. Mit steigendem Zugkraftbedarf der Nachlaufgeräte erhöht sich der Verschleiß von Anschlagnase und Fanghaken, so dass diese vorzeitig ausgetauscht werden müssen. Alternativ zu einer schwenkbaren Anschlagnase sind Verschiebebolzen bekannt, welche ebenfalls entsprechenden Verschleiß an der Kontaktstelle zum Fanghaken aufweisen.

Aufgabe der Erfindung ist es, eine verschleißfreie oder verschleißärmere Verbindungseinrichtung zwischen Fangarm bereitzustellen, welche geringere Betätigungskräfte aufweisen und obige Nachteile vermeiden oder mindern.

Diese Aufgabe wird durch die Merkmale des kennzeichnenden Teiles des Anspruches 1 gelöst.

Ein landwirtschaftliches Gerät ist mit einem Fangarm zur Kopplung und Mitnahme eines Nachlaufgerätes versehen. Dabei ist das Nachlaufgerät mit zumindest einem Mitnehmerarm ausgestattet. Der Fangarm weist ein Führungsprofil und eine lösbare Koppelvorrichtung auf, welche den Mitnehmerarm, welcher durch das Führungsprofil bei einem Koppelvorgang aufgenommen wird, mit dem Fangarm lösbar verbindet. Dabei weist die Koppelvorrichtung zumindest eine Klinke auf, welche schwenkbar um eine Klinkachse mit dem Fangarm und/oder dem Führungsprofil verbunden ist.

Erfindungsgemäß enthält die Koppelvorrichtung weiterhin zumindest eine bewegliche und betätigbare Verschlussfalle. Diese Verschlussfalle ist beweglich mit dem Fangarm und/oder dem Führungsprofil verbunden. Dabei arretiert die Verschlussfalle in einer ersten Arretierstellung die Klinke und gibt die Klinke in einer zweiten Stellung frei. Dadurch wird die Klinke in eine Lösestellung verschwenkt und die Verbindung zwischen Fangarm und Mitnehmerarm gelöst.

In einer verbesserten Erfindungsform weist die Koppelvorrichtung einen Energiespeicher auf. Dieser ist so zwischen der Klinke und Fangarm und/oder dem Führungsprofil angeordnet, dass die Klinke aus der Lösestellung in die Arretierstellung zurückgeführt wird. Somit kann die Klinke, sobald sie nach Betätigung der Verschlussfalle verschwenkt und den Mitnehmerarm löst, in die Ausgangslage zurückschwenken, nachdem der Mitnehmerarm des Nachlaufgerätes die Klinke passiert hat und vom Fangarm gelöst ist.

In einer erweiterten Form der Erfindung ist die Verschlussfalle mit einer Fernbetätigung versehen, mit welcher diese von einer entfernten Position betätigt werden kann. Dies kann von einem Bediener aus der Kabine oder eines Fahrerstandes eines Fahrzeuges geschehen, welches dem Betrieb und der Fortbewegung auf einem Acker dient. Weiterhin kann die Fernbetätigung von einer Steuerung automatisch erfolgen.

Zudem wird weiterhin vorgeschlagen, die Fernbetätigung als Stellmotor auszubilden. Es werden hydraulische, elektrische oder pneumatische Stellmotoren vorgeschlagen. Diese werden von einem Druck- oder Energiereservoir versorgt, welches beispielsweise auf dem landwirtschaftlichen Gerät oder einem das Gerät betreibenden Fahrzeuges angeordnet ist. Die Stellmotoren können als Zug- oder Druckzylinder oder als Elektromagnet mit beweglichem Anker oder als Spindel- oder Getriebemotor ausgebildet sein.

In einer kompakten Erfindungsform ist die Verschlussfalle als Stellmotor ausgebildet. Somit kann die Funktion der Verschlussfalle in den Stellmotor integriert werden und dieser als Montagebaugruppe der Klinke zugeordnet werden.

In einer verbesserten Form der Erfindung weist die Verschlussfalle einen Energiespeicher auf, welcher die Verschlussfalle aus einer betätigten Stellung in eine unbetätigte Stellung zurückführend angeordnet ist. Somit kann die Verschlussfalle einfachwirkend betätigt werden, während die Rückstellbewegung durch den Energiespeicher erfolgt. Eine einfachwirkende Betätigung kann beispielsweise durch ein Zugseil, einen Zug- oder Druckzylinder oder einen Elektromagnet mit beweglichem Anker oder einen Spindel- oder Getriebemotor erfolgen.

In einer kinematisch günstigen Form der Erfindung weist die Klinke einen ersten Kontaktpunkt mit dem Mitnehmerarm und einen zweiten Kontaktpunkt mit der Verschlussfalle auf. Dabei ist die Klinke derart ausgebildet, dass der Abstand des zweiten Kontaktpunktes zur Klinkachse größer ist als der Abstand des ersten Kontaktpunktes zur Klinkachse. Somit werden die Haltekräfte, welche sich gegen die Verschlussfalle stützen, reduziert.

In einer weiteren Erfindungsform bildet der Fangarm eine Symmetrieebene parallel zum Boden. Dabei ist die Klinkachse auf einer Seite und die Verschlussfalle auf der anderen Seite des Fangarmes oder des Mitnehmerarmes angeordnet. Hierdurch werden die auftretenden Lagerkräfte, mit welchen sich die Klinke und die Verschlussfalle auf beide Seiten des Führungsprofiles anteilig abgestützt.

In einer weiter verbesserten Erfindungsform ist die Klinke mehrarmig ausgebildet. Dabei ist ein erster Arm mit einem ersten Kontaktpunkt dem Mitnehmerarm und zweiter Arm mit einem zweiten Kontaktpunkt der Verschlussfalle zugeordnet. Somit können in beengten Bauraumverhältnissen Klinke und Verschlussfalle flexibel zueinander angeordnet werden, ohne den für die freie Passage des Mitnehmerarmes benötigten Freiraum zu begrenzen.

Ebenso kann die Klinke als rotierende Klinke mit mehreren abstehenden Armen ausgebildet sein.

In einer weiteren Form der Erfindung weist die Klinke einen Kontaktpunkt mit dem Mitnehmerarm auf und ist derart ausgebildet, dass der Kontaktpunkt in Arbeitsrichtung gemessen auf Höhe der Klinkachse oder hinter der Klinkachse angeordnet ist. Hierdurch kann der Schwenkwinkel der Klinke reduziert und entsprechender Freiraum für die Kline und deren Bewegung eingespart werden.

Die Erfindung zeichnet sich insbesondere dadurch aus, dass ein landwirtschaftliches Gerät mit einem Fangarm zur Kopplung und Mitnahme eines Nachlaufgerätes eine Koppelvorrichtung am Fangarm trägt, welche mit einer arretierbaren Klinke einen Mitnehmerarm des Nachlaufgerätes in der Koppelvorrichtung hält. Um den bei zunehmend größeren Arbeitsbreiten des Nachlaufgerätes auftretenden Zug- und Koppelkräften zu begegnen, ist die Klinke mit einer Verschlussfalle arretiert, um den durch die Zug- und Koppelkräfte entstehenden, vorzeitigen Verschleiß der Koppelvorrichtung zu vermeiden.

Weitere Einzelheiten und Vorteile des Erfindungsgegenstandes ergeben sich aus der nachfolgenden Beschreibung und den zugehörigen Zeichnungen, in denen Ausführungsbeispiele mit den dazu notwendigen Einzelheiten und Einzelteilen dargestellt sind. Es zeigen:
Fig.1 ein landwirtschaftliches Gerät mit Nachlaufgerät in Draufsicht,
Fig.2 eine Koppelvorrichtung am Fangarm in einer Perspektive sowie in
Fig. 3 in Schnittdarstellung,
Fig. 4 und Fig 5. die Koppelvorrichtung analog zu Fig. 2 und Fig. 3 in Lösestellung,
Fig. 6 und Fig. 7 ein Detail der Klinke aus Fig. 2 und Fig. 3,
Fig. 8 und Fig 9. sowie
Fig. 10 und Fig. 11 die Koppelvorrichtung in einer alternativen Ausführungsform zu Fig. 2 und Fig. 3.

Bei den Darstellungen handelt es sich im Wesentlichen um konkrete Ausführungsbeispiele. Die Erfindung ist hingegen nicht auf die dargestellten Ausführungsbeispiele beschränkt, sondern kann auch in fachmännischer Weise abgewandelt werden, um sie einem bestimmten Anwendungsfall anzupassen.

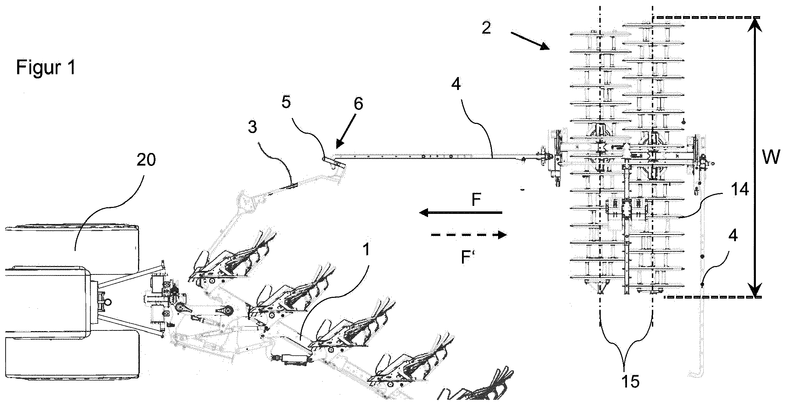

Figur 1 zeigt ein als wendbarer Pflug ausgebildetes landwirtschaftliches Gerät 1, welches an einen Fahrzeug 20 angebaut ist und mit welchem eine Bodenoberfläche eines Ackerfeldes bearbeitet wird. Die bearbeitete, durch das landwirtschaftliche Gerät 1 gelockerte Bodenoberfläche wird durch ein folgendes Nachlaufgerät 2 in einer Arbeitsbreite W weiter bearbeitet, insbesondere gekrümelt und/oder rückverfestigt. Die Arbeitsbreite W wird durch Bodenbearbeitungswerkzeuge 14 definiert, welche zumindest nebeneinander und quer zu einer Arbeitsrichtung oder Fahrtrichtung F des landwirtschaftlichen Gerätes 1 beabstandet angeordnet sind. Dargestellt sind ringförmige Bodenbearbeitungswerkzeuge 14 zum Schneiden und Rückverfestigen des Ackerbodens. Diese sind drehbar um zumindest eine, im vorliegenden Beispiel zwei Lagerachsen 15 am Nachlaufgerät 2 befestigt. Die Reihen von Bodenbearbeitungswerkzeugen 14 erstrecken sich etwa symmetrisch von der Mitte zum jeweils äußeren Ende des Nachlaufgerätes 2. Das Nachlaufgerät 2 wird über einen Fangarm 3 des landwirtschaftlichen Gerätes 1, welcher in einem Mitnehmerarm 4 verhakt, seitlich hinter dem landwirtschaftlichen Gerät 1 in Arbeitsrichtung F mitgezogen. Die Mitnehmerarme sind an ihren freien Enden hakenförmig ausgebildet. An einem Ende des Ackerfeldes wird das Nachlaufgerät 2 mittels der Koppelvorrichtung 6 vom Fangarm 3 und somit vom landwirtschaftlichen Gerät 1 gelöst und verbleibt auf der bearbeiteten Fläche des Ackerfeldes. Nachdem das landwirtschaftliche Gerät 1 mit dem Fangarm 3 in eine nächste, gegenüberliegende Arbeitsstellung gewendet wurde, kann dieses mit dem Fangarm 3 in den vom Nachlaufgerät 2 abstehenden Mitnehmerarm 4 verfangen und gemeinsam mit dem Nachlaufgerät 2 in eine neue Arbeitsrichtung F' bewegt werden.

Am Nachlaufgerät 2 sind jeweils in Arbeitsrichtung F gegenüberliegend zwei Mitnehmerarme 4 seitlich schwenkbar angeordnet, derart, dass mittels eines Koppelgestänges die Mitnehmerarme 4 etwa im rechten Winkel zueinander stehen. Je nach Fahrtrichtung F, F' des landwirtschaftlichen Gerätes 1 verfängt der eine oder der andere Mitnehmerarm 4 im Fangarm 3 des vorbeifahrenden landwirtschaftlichen Gerätes 1. Das Nachlaufgerät 2 richtet sich mit seinen Arbeitswerkzeugen 14 beziehungsweisen den Lagerachsen 15 quer zur gewählten Arbeitsrichtung F aus. Der jeweils mit dem Fangarm 3 verhakte Mitnehmerarm 4 richtet sich in Arbeitsrichtung F aus, während der gegenüberliegende Mitnehmerarm 4 in die zukünftige, nächste Fangstellung verschwenkt.

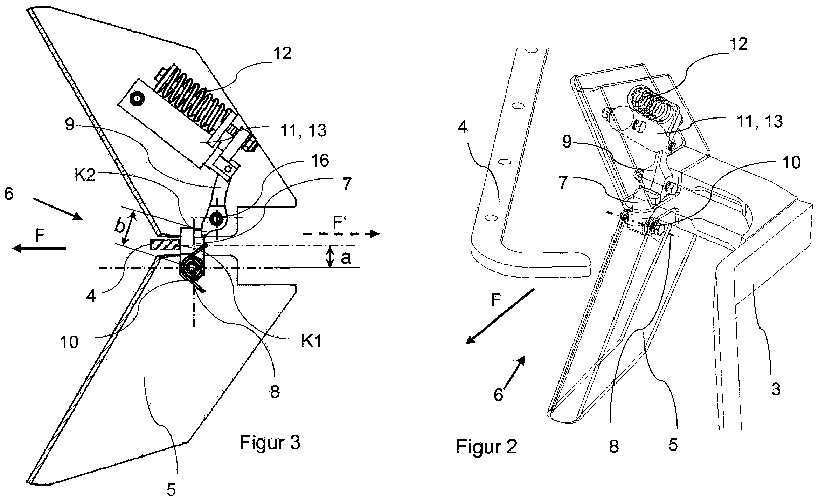

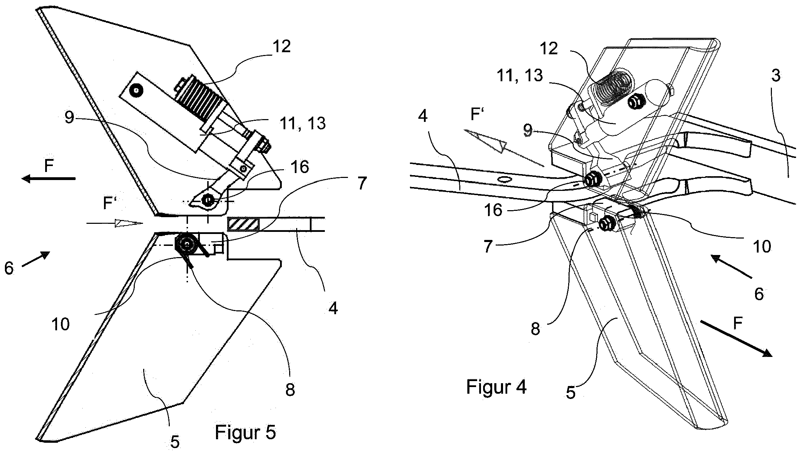

Figur 2 und 3 zeigen den Prinzipaufbau der Koppelvorrichtung 6, welche am Fangarm 3 befestigt ist. In Figur 2 ist der Mitnehmerarm 4 dargestellt, kurz bevor er in Arbeitsrichtung F durch das Führungsprofil 5 aufgenommen wird und sich mit dem Fangarm 3 beziehungsweise der Koppelvorrichtung 6 verfängt. In der Schnittdarstellung in Figur 3 liegt der Mitnehmerarm 4 mit seinem Querschnitt am Kontaktpunkt K1 der Klinke 7 an. Diese ist um die Klinkachse 8 schwenkbar im Führungsprofil 5 gelagert. Der Kontaktpunkt K1 der Klinke 7 ist um den Abstand a von der Klinkachse 8 beabstandet. Die Klinke 7 wird endseitig in einer arretierten Stellung von der Verschlussfalle 9 am Kontaktpunkt K2 gehalten. Diese ist um eine Lagerachse 16 schwenkbar im Führungsprofil 5 gelagert und wird durch eine, als Stellmotor 13 ausgebildete Fernbetätigung 11 betätigt. Die Fernbetätigung 11 enthält einen Energiespeicher 12, welcher diese in der Arretierstellung hält oder zurückführt, nach dem die Fernbetätigung 11 betätigt wurde. Wird die Fernbetätigung 11 entsprechend Figur 4 und 5 betätigt, schwenkt der Kontaktpunkt K2 mit der Verschlussfalle 9 von der Klinke 7 weg und gibt diese frei. Zugleich wird der als Druckfeder ausgebildete Energiespeicher 12 komprimiert, um später nach Deaktivierung der Fernbetätigung 11 die Verschlussfalle um die Lagerachse 16 wieder zurück in die Arretierstellung zu bewegen. Durch die vom Nachlaufgerät 2 entgegen der Arbeitsrichtung wirkende Auflagekraft des Mitnehmerarmes 4 auf die Klinke 7 schwenkt diese um die Klinkachse 8 entgegen dem Rückstellmoment des Energiespeichers 10 nach hinten, also entgegen der Arbeitsrichtung F in die Kontur des Führungsprofiles 5, in eine Lösestellung. Der Mitnehmerarm 4 kann das Führungsprofil 5 in Richtung F' verlassen. Danach stellt der Energiespeicher 10, welcher dargestellt als Schenkelfeder ausgebildet ist, die Klinke 7 um die Klinkachse 8 zurück in die Arreitierstellung aus Figur 2 und 3. Alternativ zu einer Schenkelfeder kann die Klinke mit einem rückwärtigem Arm versehen werden, auf welche eine Druck- oder Zugfeder wirkt, welche sich am Führungsprofil 5 der Koppelvorrichtung 6 abstützt. Ist der Energiespeichers 10 entsprechend ausgelegt, kann sein auf die Klinke 7 wirkendes Rückstellmoment bzw. die Rückstellkraft die Verschlussfalle 9 selbsttätig zurück bewegen, um die Arretierstellung zu erreichen. Die Verschlussfalle 9 kann dazu in Bezug auf die Fernbetätigung 11 einen entsprechenden Freigang aufweisen. Danach schnappt die Verschlussfalle wieder ein und arretiert die Klinke 7. Der Klinke 7 und der Verschlussfalle 9 können weitere Anschläge zugeordnet sein, um deren Bewegung zu begrenzen.

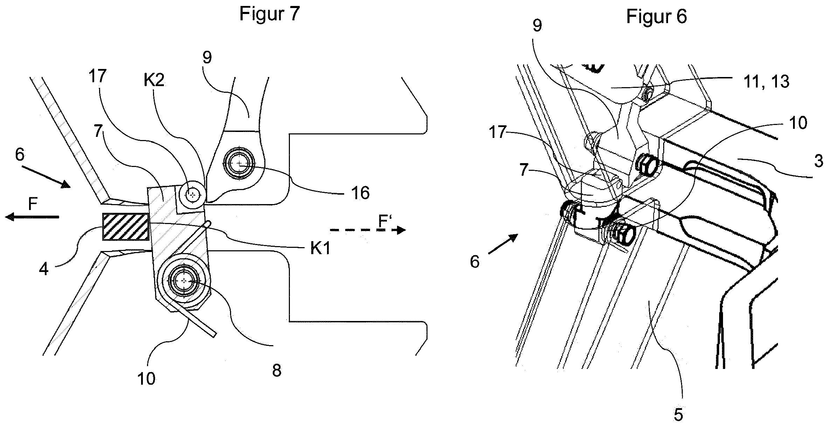

Figur 6 und 7 zeigen eine besondere Form der Klinke. Um die Reibung bei Betätigung der Verschlussfalle 9 am Kontaktpunkt K2 zu vermindern, ist dieser als Rolle 17 ausgebildet. Somit kann die Verschlussfalle 9 bei Betätigung über die Rolle 17 der Klinke 7 abrollen, während in der gezeigten Arretierstellung die Klinke 7 durch die Verschlussfalle 9 blockiert wird und den Mitnehmerarm 4 in der Koppelvorrichtung 6 hält.

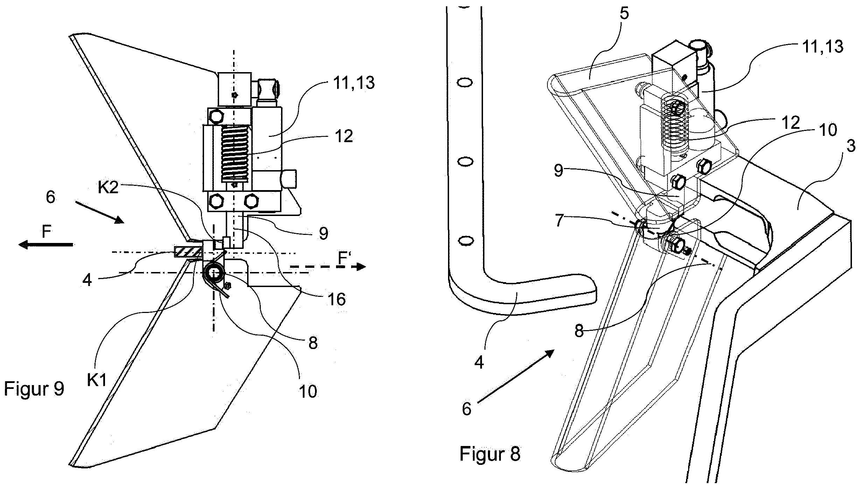

Analog zu Figur 2 und 3 zeigen Figur 8 und 9 eine alternative Ausführung der Koppelvorrichtung 6. Anstelle einer schwenkbaren Verschlussfalle 9 wird diese im vorliegenden Beispiel translatorisch durch die Fernbetätigung 11 entlang der Lagerachse 16 entriegelt. Auch hier komprimpiert die als Stellmotor 13 ausgebildete Fernbetätigung 11 zugleich einen Energiespeicher 12, welcher die Verschlussfalle 9 nach Entriegelung und Lösen des Mitnehmerarmes 4 von der Koppelvorrichtung 6 wieder in die Arretierstellung zurück bewegt.

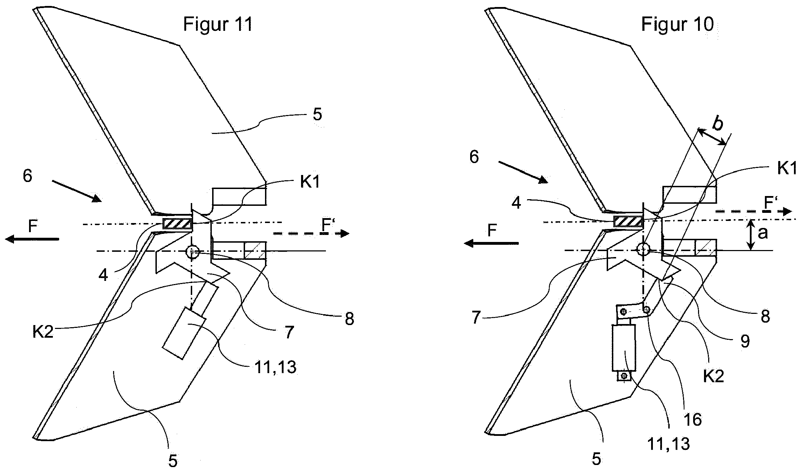

Figur 10 und 11 zeigen eine weitere Ausführungsform einer mehrarmigen Klinke 7. Die vorzugsweise drei- oder vierarmig ausgebildtete Klinke ist drehbar um die Klinkachse 8 am Führungsprofil 5 gelagert. Durch eine um die Lagerachse 16 schwenkbare Verschlussfalle 9 und einer Fernbetätigung 11 kann die Klinke entriegelt werden und entsprechend der Auslösebewegung des Mitnehmerarms 4 in die nächste Arretierungstellung drehen, wie in Figur 10 dargestellt. In einer alternativen Ausführung in Figur 11 kann auch ein Stellmotor 13 die Funktion der Verschlussfalle übernehmen.

Es folgt ein Blatt mit Zeichnung.

### BEZUGSZEICHENLISTE

| | |
|---|---|
| 1 | Landwirtschaftliches Gerät |
| 2 | Nach laufgerät |
| 3 | Fangarm |
| 4 | Mitnehmerarm |
| 5 | Führungsprofil |
| 6 | Koppelvorrichtung |
| 7 | Klinke |
| 8 | Klinkachse |
| 9 | Verschlussfalle |
| 10 | Energiespeicher |
| 11 | Fernbetätigung |
| 12 | Energiespeicher |
| 13 | Stellmotor |
| 14 | Bodenbearbeitungswerkzeug |
| 15 | Lagerachse |
| 16 | Lagerachse |
| 17 | Rolle |
| 20 | Fahrzeug |
| | |
| F | Arbeitsrichtung, Fahrtrichtung |
| K1 | Kontaktpunkt |
| K2 | Kontaktpunkt |
| W | Arbeitsbreite |

## Patentansprüche

1. Landwirtschaftliches Gerät (1) mit einem Fangarm (3) zur Kopplung und Mitnahme eines Nachlaufgerätes (2), wobei das Nachlaufgerät (2) mit zumindest einem Mitnehmerarm (4) ausgestattet ist, wobei der Fangarm (3) ein Führungsprofil (5) und eine lösbare Koppelvorrichtung (6) aufweist, welche den Mitnehmerarm (4), welcher durch das Führungsprofil (5) bei einem Koppelvorgang aufgenommen wird, mit dem Fangarm (3) lösbar verbindet, wobei die Koppelvorrichtung (6) eine Klinke (7) aufweist, welche schwenkbar um eine Klinkachse (8) mit dem Fangarm (3) und/oder dem Führungsprofil (5) verbunden ist,
**dadurch gekennzeichnet,**
**dass** die Koppelvorrichtung (6) weiterhin eine bewegliche und betätigbare Verschlussfalle (9) aufweist, welche beweglich mit dem Fangarm (3) und/oder dem Führungsprofil (5) verbunden ist, wobei die Verschlussfalle (9) in einer Arretierstellung die Klinke (7) arretiert und in einer zweiten Stellung die Klinke (7) freigibt, sodass diese in eine Lösestellung verschwenkt und die Verbindung zwischen Fangarm (3) und Mitnehmerarm (4) löst.

2. Landwirtschaftliches Gerät nach Anspruch 1,
**dadurch gekennzeichnet,**
**dass** die Koppelvorrichtung (6) einen Energiespeicher (10) aufweist, welcher die Klinke (8) aus der Lösestellung in die Arretierstellung zurückführend zwischen der Klinke (8) und Fangarm (3) und/oder Führungsprofil (5) angeordnet ist.

3. Landwirtschaftliches Gerät nach Anspruch 1 oder 2,
**dadurch gekennzeichnet,**
**dass** die Verschlussfalle (9) durch eine Fernbetätigung (11) betätigbar ausgebildet ist.

4. Landwirtschaftliches Gerät nach vorstehenden Ansprüchen,
**dadurch gekennzeichnet,**
**dass** die Fernbetätigung (11) als Stellmotor ausgebildet ist.

5. Landwirtschaftliches Gerät nach vorstehenden Ansprüchen,
**dadurch gekennzeichnet,**
**dass** die Verschlussfalle (9) als Stellmotor ausgebildet ist.

6. Landwirtschaftliches Gerät nach vorstehenden Ansprüchen,
**dadurch gekennzeichnet,**
**dass** die Verschlussfalle (9) einen Energiespeicher (12) aufweist, welcher die Verschlussfalle (9) aus einer betätigten Stellung in eine unbetätigte Stellung zurückführend angeordnet ist.

7. Landwirtschaftliches Gerät nach vorstehenden Ansprüchen,
**dadurch gekennzeichnet,**
**dass** die Klinke (7) einen ersten Kontaktpunkt (K1) mit dem Mitnehmerarm (4) und einen zweiten Kontaktpunkt (K2) mit der Verschlussfalle (9) ausweist und derart ausgebildet ist, dass der Abstand (b) des zweiten Kontaktpunktes (K2) zur Klinkachse (8) größer ist als der Abstand (a) des ersten Kontaktpunktes zur Klinkachse (8).

8. Landwirtschaftliches Gerät nach vorstehenden Ansprüchen,
**dadurch gekennzeichnet,**
**dass** die Klinkachse auf einer Seite und die Verschlussfalle auf der anderen Seite des Fangarmes oder des Mitnehmerarmes angeordnet sind.

9. Landwirtschaftliches Gerät nach vorstehenden Ansprüchen,
**dadurch gekennzeichnet,**
**dass** die Klinke (7) mehrarmig ausgebildet ist, wobei ein erster Arm mit einem ersten Kontaktpunkt (K1) dem Mitnehmerarm (4) und zweiter Arm mit einem zweiten Kontaktpunkt (K2) der Verschlussfalle (9) oder frei abstehend zugeordnet ist.

10. Landwirtschaftliches Gerät nach vorstehenden Ansprüchen,
**dadurch gekennzeichnet,**
**dass** das Nachlaufgerät (2) in einer Arbeitsstellung hinter dem Fangarm (3) und der Klinkachse (8) angeordnet ist, wobei die Klinke (7) einen Kontaktpunkt (K1) mit dem Mitnehmerarm ausweist und derart ausgebildet ist, dass der Kontaktpunkt (K1) auf Höhe der Klinkachse (8) oder in Richtung des Nachlaufgerätes (2) hinter der Klinkachse (8) angeordnet ist.
